# EUROPÄISCHE PATENTSCHRIFT

(11) **EP 1 352 283 B1**
(45) Veröffentlichungstag und Bekanntmachung des Hinweises auf die Patenterteilung: **16.03.2005**
(21) Anmeldenummer: 01273115.4
(22) Anmeldetag: 18.12.2001
(51) Int. Cl.: G02B 21/24

(54) **ANORDNUNG ZUR SCHARFEINSTELLUNG FÜR MIKROSKOPE**
ARRANGEMENT FOR THE FINE-FOCUSSING OF MICROSCOPES
DISPOSITIF DE FOCALISATION POUR MICROSCOPES

(30) Priorität: 16.01.2001 DE 10101624
(43) Veröffentlichungstag der Anmeldung: 15.10.2003
(73) Patentinhaber: CARL ZEISS JENA GmbH, 07745 Jena (DE)
(72) Erfinder: KNOBLICH, Johannes, 07747 Jena (DE); KAUFHOLD, Tobias, 07749 Jena (DE); WINTEROT, Johannes, 07745 Jena (DE)
(86) Internationale Anmeldenummer: PCT/EP2001/014917
(87) Internationale Veröffentlichungsnummer: WO 2002/056085

(56) Entgegenhaltungen:
- DE-A- 4 213 312
- DE-A- 19 822 256
- US-A- 3 721 759
- US-A- 5 684 627

## Beschreibung

Die Erfindung bezieht sich auf eine Anordnung zur Scharfeinstellung für Mikroskope, vorzugsweise für Stereomikroskope, mit einem Antrieb für die Fokussierbewegung in Richtung der Koordinate Z sowie mit Mitteln zur Kontrolle der Scharfeinstellung auf mehrere verschiedene Positionen z₁, z₂ ... zₙ, die innerhalb eines Beobachtungsobjektes auf der Koordinate Z liegen.

Eine wesentliche Voraussetzung für eine exakte mikroskopische Beobachtung ist die Fokussierung bzw. Scharfeinstellung auf die interessierenden Bereiche an der Oberfläche oder in der Tiefe einer Probe. In der Tiefe der Probe können das beispielsweise die Grenzbereiche zwischen mehreren in Richtung der Koordinate Z übereinander gelagerten mehr oder weniger transparenten Schichten sein. Wird ein Mikroskop mit geringer Schärfentiefe verwendet, so kann auf jede dieser in der Tiefe gestaffelten optischen Grenzschichten gesondert fokussiert werden.

Die dabei jeweils von Grenzschicht zu Grenzschicht - oder allgemeiner - von Fokusposition zu Fokusposition erforderliche Fokussierbewegung wird im klassischen Mikroskopaufbau mit Hilfe von manuell zu betätigenden Getrieben realisiert, die über große Übersetzungen und hohe Feinfühligkeit der Einstellung verfügen. Dabei kann mit der Drehung oder Verschiebung eines Antriebsknopfes um beispielsweise 1 mm eine Fokussierbewegung in der Größenordnung von 1 µm erzielt werden.

Wird ein solches Getriebe in Verbindung mit einer Längenmeßeinteilung verwendet, so ist es möglich, den Verstellweg abzulesen bzw. zu errechnen, der bei der Verstellung von einer ersten Fokusposition auf eine zweite Fokusposition zurückzulegen ist. Auf diese weise ist es bis zu einem gewissen Genauigkeitsgrad möglich, Tiefenmessungen am mikroskopischen Objekt durchzuführen.

Ein solches Mikroskop ist aus der US 3,721,759 bekannt. Hierbei wird die Fokussierbewegung über einen Meßwertaufnehmer erfaßt und zur Anzeige gebracht. Die Genauigkeit der Messung ist aber bei dieser Lösung durch die Größe der Schärfentiefe des optischen Systems begrenzt.

Von diesem Stand der Technik ausgehend liegt der Erfindung die Aufgabe zugrunde, eine bessere Beurteilung der Schärfe zu ermöglichen und damit die Genauigkeit bei Tiefenmessungen zu erhöhen.

Erfindungsgemäß ist es bei einer Anordnung nach Anspruch 1 mit hoher Genauigkeit möglich, auch Mikroskope mit geringer Schärfentiefe definiert auf unterschiedliche Ebenen, deren Abstand unterhalb der Schärfentiefe liegt, zu fokussieren.

Erfindungsgemäß ist weiterhin vorgesehen, daß der motorische Antrieb und das Wegemeßsystem miteinander gekoppelt sind, wobei bevorzugt als Antrieb ein Schrittmotor verwendet wird, bei dem aus der Anzahl der Antriebsschritte, die für den Verstellweg Δz erforderlich sind, die Maßangabe für den Verstellweg Δz gewonnen wird.

Zur Ermittlung der Anzahl der Antriebsschritte kann vorteilhaft die im Mikroskop bereits vorhandene Ansteuerelektronik für den Schrittmotor verwendet werden oder es kann diese Ansteuerelektronik mit einer Auswerteschaltung für die Anzahl der zurückgelegten Antriebsschritte bei der Verstellung um den Weg Δz ergänzt werden.

Die Anzeigeeinrichtung kann dabei so ausgelegt sein, daß sowohl die erste ausgewählte Position z₁ angezeigt und diese Anzeige auch bei Verlassen dieser Position z₁ beibehalten wird, wonach bei Erreichen der zweiten ausgewählten Position z₂ auch diese angezeigt wird. Aus beiden angezeigten Positionswerten ist nun leicht die Differenz zu bilden, die ein Maß für den zurückgelegten Verstellweg Δz und damit für die zu ermittelnde Tiefe innerhalb der Probe ist.

Alternativ hierzu kann das Wegmeßsystem in Verbindung mit der Anzeigeeinrichtung so ausgebildet sein, daß für die erste ausgewählte Position z₁, nachdem auf diese Position z₁ fokussiert worden ist, der Wert "null" gesetzt wird. Wird nun von dieser Position z₁ ausgehend auf die Position z₂ fokussiert und aus der Anzahl der Antriebsschritte die Maßangabe für den zurückgelegten Verstellweg Δz gewonnen, so kann dieser unmittelbar als Tiefenmaß angezeigt werden, ohne daß erst noch eine Differenz gebildet werden muß.

Selbstverständlich kann vorgesehen sein, daß sowohl die Positionen z₁, z₂ als auch der Verstellweg Δz angezeigt werden.

Weiter ist es denkbar, anstelle des Schrittmotors und der Zähleinrichtung für die Antriebsschritte des Schrittmotors einen herkömmlichen Motor zu verwenden und diesen mit einem Drehwinkelgeber auszurüsten, von dem während der Verstellbewegung periodisch Drehwinkelsignale als Maß für den zurückgelegten Verstellweg an die Auswerteschaltung gegebenen, diese gezählt werden und aus der Summe auf den Verstellweg Δz bzw. das zu ermittelnde Tiefenmaß geschlossen wird.

Vorteilhafterweise ist weiterhin vorgesehen, daß zur Auslösung der Fokussierbewegung ein Fußschalter vorhanden ist, die Berechnung des Verstellweges Δz mit einem mit dem Mikroskop verbundenen Personalcomputer erfolgt und ein an den Personalcomputer angeschlossener Monitor als Anzeigeeinrichtung dient. Auf diese weise kann kostengünstig handelsüblich erhältliche Hard- und Software zur Realisierung der Erfindung genutzt werden.

Die Genauigkeit der Scharfeinstellung bei Nutzung einer solchen Anordnung wird auch durch die Positioniergenauigkeit des Fokussiertriebes bestimmt. Als weitere Maßnahmen zur genaueren Fokussierung sind die bereits in der Mikroskopie übliche Nachvergrößerung sowie auch die Verwendung von Vorsatzsystemen, die zwischen dem Greenough-System und der Probe anzuordnen sind, denkbar.

Weiterhin kann mit den beiden gegeneinander geneigten Strahlengängen auch die Einstellung nach einem Triangulationsprinzip erfolgen, wobei die Strichmarken in beiden Strahlengängen fest stehen, während man auf eine nächste Fokusposition des Meßgegenstandes fokussiert und innerhalb der Tiefenschärfe durch Feinfokussierung auch noch die Strichmarken zur Deckung bringt. Die Ermittlung des Tiefenmaßes bzw. der Höhendifferenz zwischen den beiden verschiedenen Fokussierebenen erfolgt dann ebenfalls durch Auswertung der Positionsanzeige bzw. durch Differenzbildung wie oben bereits dargelegt.

Die Erfindung soll nachfolgend anhand eines Ausführungsbeispieles näher beschrieben werden. Die zugehörigen Zeichnungen zeigen in
- Fig. 1: den prinzipiellen Aufbau der erfindungsgemäßen Anordnung mit der Prinzipdarstellung eines Mikroskops, das mit einem Anzeigedisplay versehen und mit einem Fußschalter zur Auslösung der Fokussierbewegung ausgestattet ist,
- Fig.2: einen unter einem Winkel α/2 auf das Beobachtungsobjekt gerichteten Strahlengang eines Stereomikroskops,
- Fig.3: eine im Strahlengang nach Fig.2 angeordnete, ihre Position in Richtung der Koordinaten Y mit der Fokussierbewegung verändernde Strichmarke.

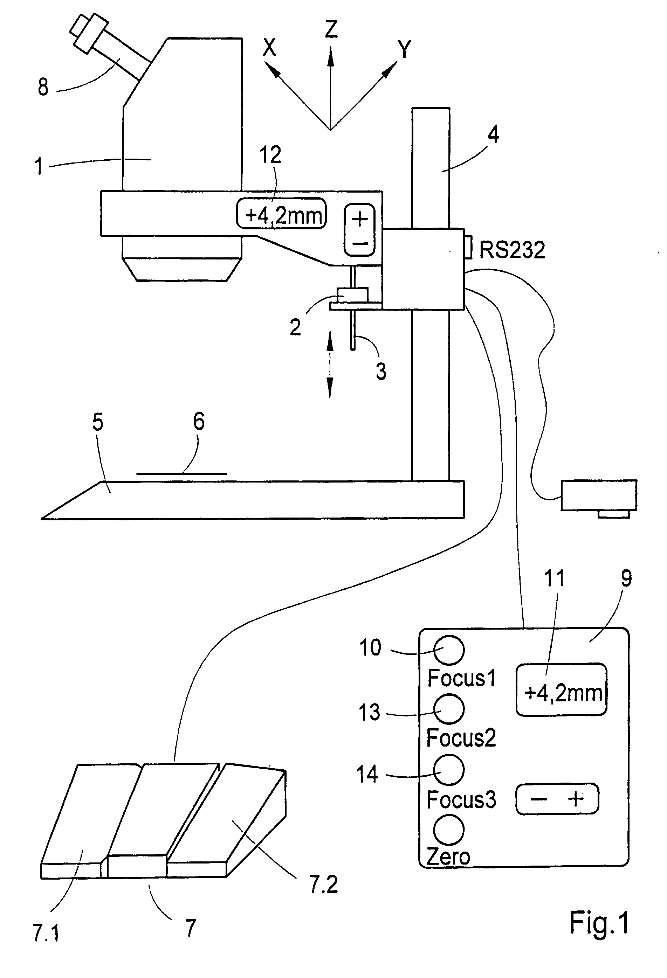

In Fig.1 ist ein Mikroskopaufbau 1 dargestellt, der mit einem symbolisch angedeuteten motorischen Antrieb 2 für die Fokussierbewegung in Richtung der Koordinate Z ausgestattet ist. Der motorische Antrieb 2 besteht aus einem Schrittmotor, von dem die Drehbewegung einer Gewindemutter (zeichnerisch nicht darstellt) als Längsbewegung auf eine Gewindespindel 3 übertragen wird.

Mit der Längsbewegung der Gewindespindel 3 wird das Anheben oder das Absenken des Mikroskopaufbaus 1 in Richtung der Koordinate Z relativ zu einem Gestell 4 veranlaßt. Fest verbunden mit dem Gestell 4 ist ein Probentisch 5, auf dem die Probe bzw. das Beobachtungsobjekt 6 abgelegt ist.

Das Auslösen der Hub- oder Senkbewegung des Mikroskopaufbaus 1 erfolgt durch Betätigung eines Fußschalters 7, bei dem zwei Fußpedale 7.1 und 7.2 vorhanden sind, mit denen der Rechts- oder der Linkslauf des Schrittmotors und damit das Heben oder Senken des Mikroskopaufbaus 1 zum Zwecke der Fokussierung veranlaßt wird.

Während der Fokussierbewegung wird das Beobachtungsobjekt 6 durch das Mikroskop mit dem Tubus 8 beobachtet und dabei die Scharfeinstellung visuell kontrolliert.

Weist das Beobachtungsobjekt 6 beispielsweise über mehrere in der Tiefe der Koordinate Z gestaffelte optische Grenzschichten auf, so ist mit dem hier dargestellten Aufbau die Tiefenmessung bzw. die Messung von Abständen zwischen den einzelnen Grenzschichten in Richtung der optischen Achse wie folgt möglich:

Zunächst wird auf eine optische Grenzschicht fokussiert, die beispielsweise in der Position z₁ liegt. Nach Scharfeinstellung auf diese optische Grenzschicht wird an einer Handbedieneinrichtung 9 ein Taster 10 betätigt, der über ein mit dem Antrieb 2 gekoppeltes Wegemeßsystem (zeichnerisch nicht im Detail dargestellt) die Anzeige der Position z₁ auf einem in die Handbedieneinrichtung 9 integrierten Display 11 und/oder auf einem am Mikroskopaufbau 1 angeordneten Display 12 veranlaßt.

Denkbar ist auch, den so ermittelten Wert über eine RS232-Schnittstelle (in Fig. 1 lediglich angedeutet) an einen PC weiterzuleiten und dort zu speichern.

Um nun die Entfernung in der Tiefe zu einer nächsten ausgewählten optischen Grenzschicht, die beispielsweise bei der Position z₂ liegt, zu ermitteln, wird jetzt auf diese zweite optische Grenzschicht fokussiert und danach durch Druck auf einen Taster 13 die Darstellung der Position z₂ auf den Displays 11 und/oder 12 veranlaßt. Zugleich kann die Position z₂ über die RS-232-Schnittstelle dem PC zugeleitet und dort ebenfalls zunächst abgespeichert werden.

Weiterhin kann nun durch Druck auf einen Taster 14 die Differenzbildung zwischen den Positionen z₁ und z₂ veranlaßt werden, wozu der PC dienen kann. In diesem Falle ist die erfindungsgemäße Anordnung vorteilhaft derart ausgestaltet, daß auf dem Display 11 und/oder auf dem Display 12 auch die Differenz Δz = z₁ - z₂ als Maß für die Tiefe zwischen den beiden beobachteten optischen Grenzschichten abzulesen ist.

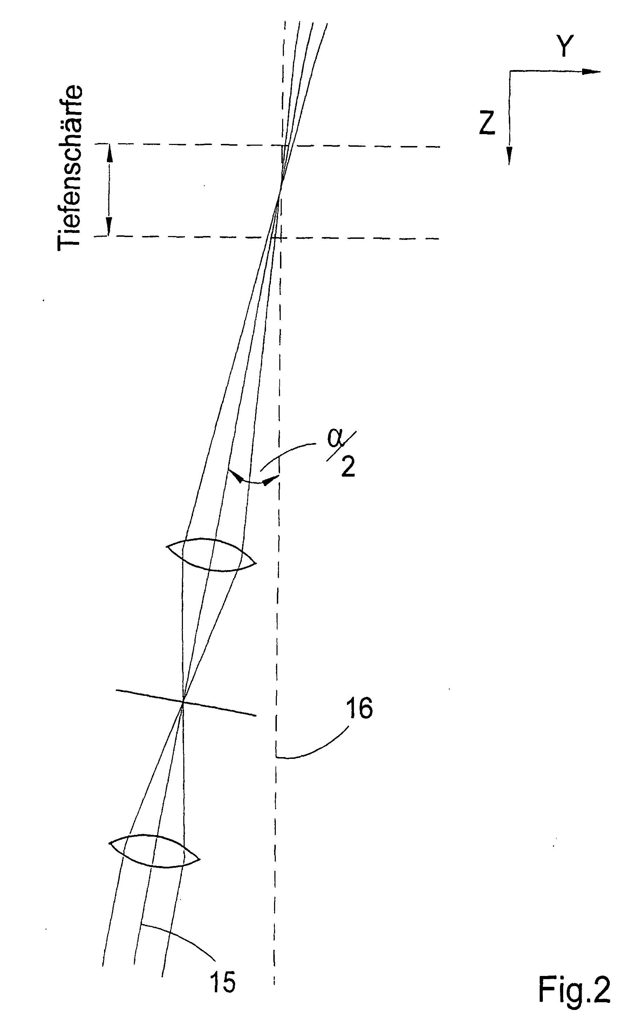

Die Genauigkeit bei der Scharfeinstellung auf die einzelnen Fokusebenen wird bei einem Greenough-Mikroskop, bei dem zwei auf das Beobachtungsobjekt 6 gerichtete und dabei unter einem Stereowinkel α gegeneinander geneigte Strahlengänge vorhanden sind, auf Werte, welche kleiner sind als die Schärfentiefe, erhöht. Das Greenough-Prinzip ist in Fig.2 symbolisch anhand nur von einem der beiden Strahlengänge dargestellt.

Dabei ist die optische Achse 15 des Strahlenganges um den Winkel α/2 gegen die Geräteachse 16 geneigt, wobei in Fig.2 die von Koordinaten Z und Y aufgespannte Ebene der Zeichenebene entspricht. Insofern liegen sowohl die optische Achse 15 als auch die Geräteachse 16 in der Zeichenebene. Die Geräteachse 16 ist parallel zur Koordinate Z ausgerichtet.

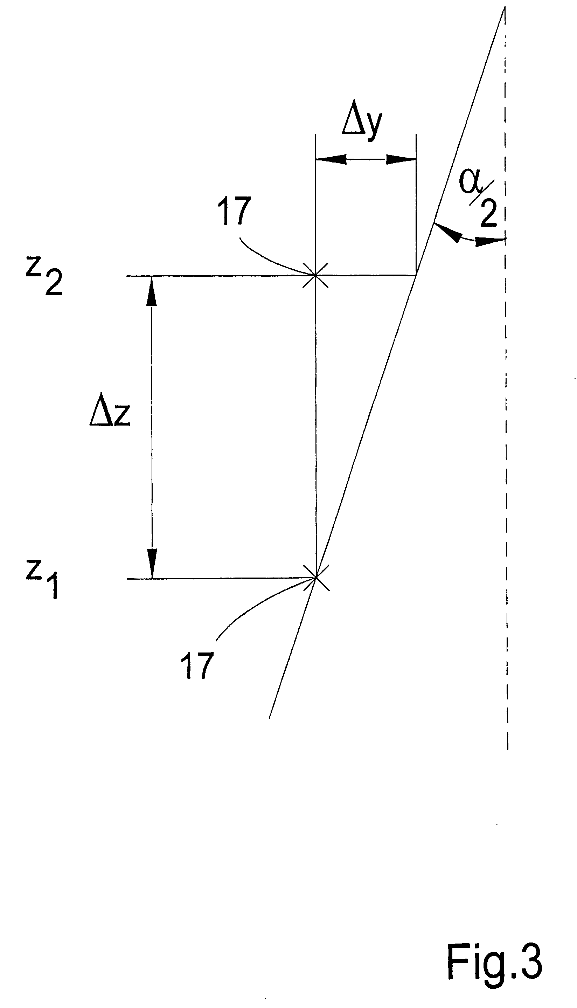

In der optischen Achse 15 des Strahlenganges ist eine mit der Fokussierbewegung ihre scheinbare Position in Richtung der Koordinate Y verändernde Strichmarke 17 vorgesehen, wie in Fig.3 dargestellt. Dies gilt im übertragenen Sinne auch für den anderen, hier nicht dargestellten Strahlengang des Stereomikroskops.

Mit den Strichmarken, die in beiden Strahlengängen des Mikroskops vorhanden sind, läßt sich innerhalb der Schärfentiefe eine Fokusposition einstellen, für die beide Strichmarken zur Deckung kommen. Diese verfeinerte Schärfeneinstellung wird erfindungsgemäß zur Erzielung einer höheren Genauigkeit bei der Tiefenmessung genutzt.

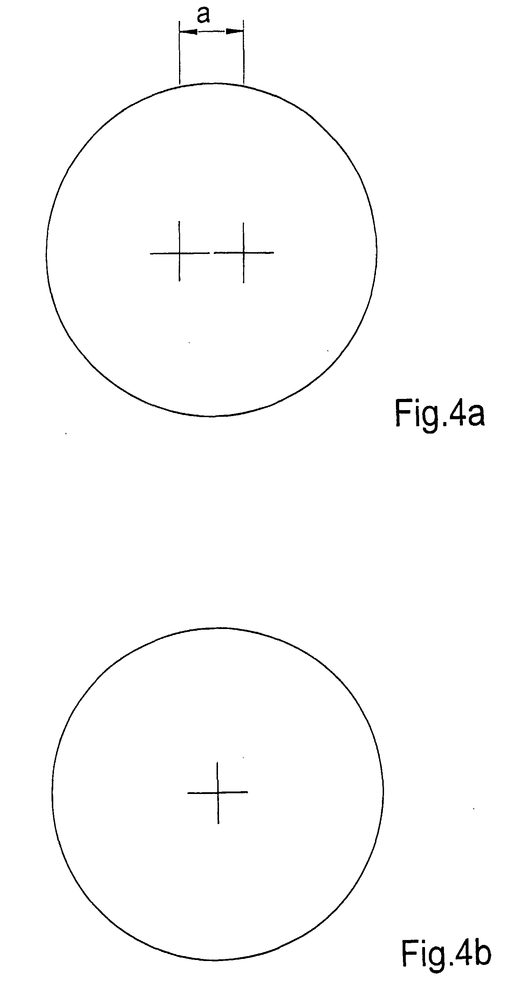

In diesem Zusammenhang zeigt Fig.4a die visuelle Wahrnehmung der unvollständig überlagerten Strichmarken beim Einblick in die Okulare des Stereomikroskops, wobei der Abstand zwischen beiden Strichmarken darauf hinweist, daß die Fokussierung noch nicht optimal erfolgt ist. In Fig.4b dagegen ist die Überdeckung beider Strichmarken bei idealer Fokussierung dargestellt.

### Bezugszeichenliste

- 1: Mikroskopaufbau
- 2: Antrieb
- 3: Gewindespindel
- 4: Gestell
- 5: Probentisch
- 6: Beobachtungsobjekt
- 7: Fußschalter
- 7.1, 7.2: Fußpedale
- 8: Tubus
- 9: Handbedieneinrichtung
- 10: Taster
- 11, 12: Display
- 13, 14: Taster
- 15: Achse
- 16: Geräteachse
- 17: Strichmarke

- X, Y, Z: Koordinate
- x, y, z: Positionen
- Δy: Betrag
- Δz: Stellweg
- α: Stereowinkel

## Patentansprüche

1. Anordnung zur Scharfeinstellung von Stereomikroskopen (1) mit zwei nach dem Greenough-Prinzip auf das Beobachtungsobjekt gerichteten und dabei unter einem Stereowinkel von a ≈ 10°-15° gegeneinander geneigten Mikroskop-Strahlengängen (15),
- mit einem Antrieb (2) für die Fokussierbewegung parallel zur Geräteachse (16) in Richtung der Koordinate Z,
- mit Mitteln zur Scharfeinstellung auf mehrere verschiedene Positione z₁, z₂ ...zₙ, die innerhalb eines Beobachtungsobjektes (6) auf der Koordinate Z liegen,
- mit einem Wegmeßsystem zur Ermittlung des zurückgelegten Verstellweges Δz bei Scharfeinstellung auf zunächst eine erste ausgewählte Position z₁ und danach auf eine zweite ausgewählte Position z₂,
- mit einer mit dem Wegmeßsystem gekoppelten Anzeigeeinrichtung (11, 12) zur Darstellung der ausgewählten Positionen z₁, z₂ und/oder zur Darstellung einer Maßangabe für den Verstellweg Δz,
**dadurch gekennzeichnet, daß**
- in beiden Strahlengängen feststehende in Tiefenrichtung des Objekts übereinander angeordnete Strichmarken (17) vorhanden sind, die mit der Fokussierbewegung ihre scheinbaren Positionen y innerhalb des Objektes in Richtung der Koordinate Y, die senkrecht zur Richtung der Koordinate Z steht, verändern,
- und wobei jeweils bestimmten Positionen der Strichmarken in der Koordinatenrichtung y eine der Positionen in Tiefenrichtung des Objekts z₁, z₂ ... zₙ zugeordnet ist und die Scharfeinstellung derart erfogt, daß in beiden Strahlengängen die scheinbaren Positionen y übereinstimmen.

2. Anordnung nach Anspruch 1, **dadurch gekennzeichnet, daß** das Wegmeßsystem mit einem motorischen Antrieb (2) gekoppelt ist.

3. Anordnung nach Anspruch 1 oder 2, **dadurch gekennzeichnet, daß** als Antrieb (2) ein Schrittmotor vorgesehen ist, wobei aus der Anzahl der Antriebsschritte, die für den Verstellweg Δz erforderlich sind, die Maßangabe für den Verstellweg Δz gewonnen wird.

4. Anordnung nach einem der vorgenannten Ansprüche, **dadurch gekennzeichnet, daß** das Wegmeßsystem und/oder die Anzeigeeinrichtung (11, 12) über eine Rechenschaltung verfügt, durch welche für die erste ausgewählte Position z₁ jeweils der Wert "Null" gesetzt und die zweite ausgewählte Position z₂ als Maßangabe für den zurückgelegten Verstellweg Δz ausgegeben wird.

5. Anordnung nach einem der vorgenannten Ansprüche, **dadurch gekennzeichnet,**
- **daß** zur Auslösung der Fokussierbewegung ein Fußschalter (7) vorgesehen ist,
- die Ermittlung des Verstellweges Δz mit Hilfe eines mit dem Mikroskop verbundenen PC erfolgt und
- ein an den PC angeschlossener Monitor als Anzeigeeinrichtung (11, 12) dient.

6. Anordnung nach einem der Ansprüche 1 bis 5, **dadurch gekennzeichnet, daß** eine Position y der Strichmarke (17) und die ihr zugeordnete Position z₁, z₂ ... zₙ der Funktion z = y /sinα entsprechen, mit α dem Stereowinkel zwischen den beiden Strahlengängen (15).

## Claims

1. Arrangement for the fine-focussing of stereomicroscopes (1) having two microscope beam paths (15) which are directed an to the Observation object according to the Greenough principle and are inclined with respect to each other at a stereo angle of α≈10°-15°,
- having a drive (2) for effecting the focussing movement in parallel with the device axis (16) in the direction of the coordinate Z,
- having means for fine-focussing an to several different positions z₁, z₂, ... zₙ which lie within an observation object (6) an the coordinate Z,
- having a path measurement system to determine the displacement path Δz travelled when fine-focussing initially upon a first selected position z₁ and then upon a second selected position z₂,
- having a display device (11, 12) which is coupled to the path measurement system to display the selected positions z₁, z₂ and/or to display a measurement for the displacement path Δz, **characterised in that** both beam paths are provided with fixed locating marks (17) which are disposed one above the other in the depth direction of the object and which by means of the focussing movement change their apparent positions y within the object in the direction of the coordinate Y which is located perpendicular to the direction of the coordinate Z,
- and wherein one of the positions in the depth direction of the object z₁, z₂, ... zₙ is allocated in each case to specific positions of the locating marks in the coordinate direction y and the tine-focussing procedure is performed in such a manner that the apparent positions y correspond in both beam paths.

2. Arrangement as claimed in claim 1, **characterised in that** the path measurement system is coupled to a motor-drive (2).

3. Arrangement as claimed in claim 1 or 2, **characterised in that** the drive (2) is provided as a step motor, wherein the measurement of the displacement path Δz is obtained from the number of drive steps which are required for the displacement path Δz.

4. Arrangement as claimed in any one of the preceding claims, **characterised in that** the path measurement system and/or the display device (11, 12) has a computing circuit, by means of which the value "zero" is set in each case for the first selected position z₁ and the second selected position z₂ is output as a measurement of the displacement path Δz travelled.

5. Arrangement as claimed in any one of the preceding claims, **characterized in that**
- a foot switch (7) is provided to trigger the focussing movement,
- the displacement path Δz is determined with the aid of a PC which is connected to the microscope, and
- a monitor which is connected to the PC is used as the display device (11, 12).

6. Arrangement as claimed in any one of claims 1 to 5, **characterised in that** a position y of the locating mark (17) and the position z₁, z₂, ... zₙ which is allocated thereto correspond to the function z = y / sin α, with α being the stereo angle between the two beam paths (15).

## Revendications

1. Agencement de focalisation de microscopes stéréo (1) avec deux marches de rayon de microscope (15) dirigées selon le principe de Greenough sur l'objet d'observation et en étant inclinées selon un angle stéréo de α ≈ 10°-15° l'une par rapport à l'autre,
- avec un organe d'entraînement (2) pour le mouvement de focalisation parallèle à l'axe d'appareil (16) en direction de la coordonnée Z,
- avec des moyens de focalisation sur plusieurs positions différentes z₁, z₂ ... zₙ, qui se situent à l'intérieur d'un objet d'observation (6) sur la coordonnée Z,
- avec un système de mesure de déplacement pour déterminer le chemin de déplacement parcouru Δz lors de la focalisation d'abord sur une première position sélectionnée z₁ et ensuite sur une deuxième position sélectionnée z₂,
- avec une installation d'affichage (11,12) couplée au système de mesure de déplacement pour représenter les positions sélectionnées z₁, z₂ et/ou pour représenter une indication de mesure du trajet de déplacement Δz,
**caractérisé en ce que** sont présentes dans les deux marches de rayon des marques de traits fixes (17) disposées dans la direction de la profondeur de l'objet les unes au-dessus des autres, qui modifient avec le mouvement de focalisation leurs positions apparentes y à l'intérieur de l'objet dans la direction de la coordonnée Y qui s'étend perpendiculairement à la direction de la coordonnée Z,
- et où respectivement des positions déterminées des marques de traits dans la direction de coordonnée y sont associées à l'une des positions dans la direction de la profondeur de l'objet z₁, z₂... zₙ, et la focalisation a lieu de façon que dans les deux marches de rayon, les positions apparentes y coïncident.

2. Agencement selon la revendication 1, **caractérisé en ce que** le système de mesure de déplacement est couplé à un organe d'entraînement (2) à moteur.

3. Agencement selon la revendication 1 ou 2, **caractérisé en ce que**, comme organe d'entraînement (2), un moteur pas-à-pas est prévu, où l'on obtient à partir du nombre de pas d'entraînement, qui sont requis pour le trajet de déplacement Δz, l'indication de mesure du trajet de déplacement Δz.

4. Agencement selon l'une des revendications précédentes, **caractérisé en ce que** le système de mesure de déplacement et/ou l'installation d'affichage (11,12) dispose d'un circuit de calcul par lequel, pour la première position sélectionnée z₁, à chaque fois la valeur "zéro" est réglée, et la deuxième position sélectionnée z₂ est émise comme indication de mesure du trajet de déplacement parcouru Δz.

5. Agencement selon l'une des revendications précédentes, **caractérisé**
- **en ce que** pour le déclenchement du mouvement de focalisation, un interrupteur à commande au pied (7) est prévu,
- que la détermination du trajet de déplacement Δz a lieu à l'aide d'un PC relié au microscope et
- qu'un moniteur connecté au PC sert d'installation d'affichage (11,12).

6. Agencement selon l'une des revendications 1 à 5, **caractérisé en ce qu'**une position y de la marque de traits (17) et la position z₁, z₂ ... zₙ qui lui est associée correspondent à la fonction z = y /sinα, avec *α* à l'angle stéréo entre les deux marches de rayon (15).
